# EUROPÄISCHE PATENTANMELDUNG

(11) **EP 2 617 343 A1**
(43) Veröffentlichungstag der Anmeldung: **24.07.2013**
(21) Anmeldenummer: 13150533.1
(22) Anmeldetag: 08.01.2013
(51) Int. Cl.: A47L 15/00, A47L 15/42, A47L 15/48, A47L 15/24

(54) **Transportspülmaschine mit Trocknungssystem und Verfahren zum Betreiben einer solchen Transportspülmaschine**

(30) Priorität: 11.01.2012 DE 102012200361
(71) Anmelder: Premark FEG L.L.C., Wilmington, Delaware 19801 (US)
(72) Erfinder: Jakway, Allen, 77736 Zell am Hamersbach (DE); Disch, Harald, 79215 Elzach (DE); Neumaier, Werner, 77656 Offenburg (DE)
(74) Vertreter: Trinks, Ole

(57) **Zusammenfassung**

Die Erfindung betrifft eine Transportspülmaschine (50), welche mindestens eine Waschzone (51, 52, 53) und mindestens eine Klarspülzone (54) sowie eine Transportvorrichtung (58) zum Transportieren von Spülgut durch die mindestens eine Wasch- und Klarspülzone (51, 52, 53, 54) aufweist. Ferner ist ein Abluftsystem (80) vorgesehen zum Abführen von Abluft aus der Transportspülmaschine (50). Um zu erreichen, dass die Transportspülmaschine (50) auch ohne ein nach außen führendes bauseitiges Abluftsystem im Aufstellraum betrieben werden kann, ist erfindungsgemäß vorgesehen, dass dem Abluftsystem (80) eine Trocknungseinrichtung zugeordnet ist zum Entziehen von Feuchtigkeit aus der mit dem Abluftsystem (80) aus der Transportspülmaschine (50) abzuführenden Abluft, wobei die Trocknungseinrichtung mindestens eine Sorptionseinheit (73, 74) mit einem reversibel dehydrierbaren Trockenmaterial aufweist. Ferner ist ein mit Wasser gekühlter Wärmetauscher (81, 82, 83) vorgesehen zum Übertragen von thermischer Energie von zumindest einem Teil der über das Abluftsystem (80) aus der Transportspülmaschine (50) abzuführenden Abluft auf das Kühlwasser des Wärmetauschers (81, 82, 83).

## Beschreibung

Die Erfindung betrifft eine Transportspülmaschine nach dem Oberbegriff des Patentanspruches 1 sowie ein Verfahren zum Betreiben einer solchen Transportspülmaschine.

Demnach betrifft die Erfindung eine Transportspülmaschine bzw. ein Verfahren zum Betreiben einer Transportspülmaschine, wobei die Transportspülmaschine insbesondere als gewerbliche Geschirr- oder Utensilienspülmaschine ausgebildet ist und mindestens eine Waschzone und mindestens eine Klarspülzone sowie eine Transportvorrichtung zum Transportieren von Spülgut durch die mindestens eine Wasch- und Klarspülzone aufweist.

Transportspülmaschinen ("conveyer ware washers") sind insbesondere Bandtransportmaschinen ("flight-type ware washers") oder Korbtransportspülmaschinen ("rack conveyer ware washers"). Transportspülmaschinen finden üblicherweise im gewerblichen Bereich Anwendung. Im Gegensatz zu Programmautomaten, bei welchen das zu reinigende Spülgut während der Reinigung ortsfest in der Maschine verbleibt, findet bei Transportspülmaschinen ein Transport des Spülguts durch verschiedenen Behandlungszonen der Transportspülmaschinen statt.

Bei Transportspülmaschinen wird das Spülgut (washware), wie beispielsweise Geschirr, Töpfe, Gläser, Besteck und andere zu reinigende Utensilien, durch mehrere Behandlungszonen, wie zum Beispiel Vorwaschzone(n), Hauptwaschzone(n), Nachwasch- bzw. Vorspülzone(n), Klarspülzone(n) und Trocknungszone(n), gefördert. Für den Transport von Spülgut in einer Transportrichtung durch die Transportspülmaschine kommt eine Transportvorrichtung zum Einsatz, die in der Regel Fächer zur Aufnahme von Spülgut aufweist. Bei einer Bandtransportspülmaschine können die Fächer durch Stützfinger auf einem Transportband der Transportvorrichtung gebildet sein. Bei Korbtransportspülmaschinen dienen als Transportvorrichtung Geschirrkörbe, in denen zur Aufnahme des zu behandelnden Spülguts Fächer ausgebildet sein können. Denkbar hierbei ist es, dass die Geschirrkörbe mit einer Fördereinrichtung durch die Korbtransportspülmaschine transportiert werden.

In der Vorwaschzone (Vorabräumung) der Transportspülmaschine wird leicht anhaftender Schmutz von dem zu behandelnden Spülgut entfernt. Hierzu wird Waschflüssigkeit durch eine Pumpe (Vorwaschpumpe) aus einem dieser Behandlungszone zugeordneten Vorratstank angesaugt und mit Hilfe von geeigneten Sprühdüsen auf das zu reinigende Spülgut gesprüht. Anschließend fließt die Waschflüssigkeit wieder zurück in den Vorratstank und wird dort erneut von der als Umwälzpumpe ausgeführten Vorwaschpumpe angesaugt und in den Umwälzkreislauf eingebracht. Üblicherweise wird der Vorratstank durch Siebe abgedeckt, um größere Schmutzpartikel aus der Spülflüssigkeit zurückzuhalten.

In der in Transportrichtung des Spülgutes gesehen der Vorwaschzone nachgeschalteten Waschzone werden mit Hilfe einer üblicherweise alkalischen Waschflüssigkeit noch an dem zu behandelnden Spülgut anhaftende Schmutzpartikel von dem Spülgut entfernt. Dazu wird die in der Regel erwärmte Waschflüssigkeit durch eine als Umwälzpumpe ausgeführte Waschpumpe aus dem der Behandlungszone zugeordneten Waschtank angesaugt und mit Hilfe geeigneter positionierter und orientierter Waschdüsen über dem Spülgut versprüht. Anschließend fließt die Waschflüssigkeit wieder zurück in den Waschtank und wird dort erneut von der als Umwälzpumpe ausgeführten Waschpumpe angesaugt. Auch hier wird der Vorratstank (Waschtank) üblicherweise durch Siebe abgedeckt, um dadurch größere Schmutzpartikel aus der Waschflüssigkeit zurückzuhalten.

Durch die in der Regel erwärmte Waschflüssigkeit entstehen beim Versprühen dieser innerhalb der jeweiligen Behandlungszone der Transportspülmaschine Dampfschwaden (Wrasen). Um ein Austreten dieser Dampfschwaden aus der Transportspülmaschine zu verhindern, ist es aus dem Stand der Technik bekannt, die einzelnen Behandlungszonen, und insbesondere die Wasch- und Klarspülzone(n) mit Hilfe geeigneter Vorhänge abzutrennen.

An der mindestens einen Waschzone schließt sich in Transportrichtung des Spülguts gesehen mindestens eine Klarspülzone an, in welcher in der Regel erhitztes Frischwasser auf das Spülgut gesprüht wird, um die noch auf der Oberfläche des Spülgutes anhaftende Waschflüssigkeit sowie gegebenenfalls noch verbleibende Schmutzreste von dem Spülgut abzuspülen. Dem in der mindestens einen Klarspülzone versprühten (heißen) Frischwasser kann bei Bedarf ein Klarspüler zudosiert sein. Durch die erhöhte Temperatur der erwärmten Klarspülflüssigkeit und die feiner Versprühung mittels der Klarspül-Sprühdüsen entstehen ebenfalls Dampfschwaden (Wrasen) in dieser Behandlungszone.

Demgemäß entstehen während des Betriebs der Transportspülmaschine Dampfschwaden (Wrasen) sowie feuchte, warme Luft. Insbesondere die Dampfschwaden müssen zumindest teilweise aus der Transportspülmaschine abgeführt werden. Die Abluft der Transportspülmaschine, d.h. die Dampfschwaden sowie die feuchte, warme Luft, welche physikalisch bedingt im Betrieb der Transportspülmaschine durch das Versprühen der aufgeheizten Wasch- und Klarspülflüssigkeit entstehen, werden üblicherweise über ein bauseitiges Abluftsystem aus dem Raum, in welchem die Transportspülmaschine aufgestellt ist, abgeführt. Das Abluftsystem muss dabei ausgelegt sein, zumindest einen Großteil der beim Betrieb der Transportspülmaschine entstehenden Abluft aus dem Aufstellraum der Transportspülmaschine nach außen abzuführen, um wirksam verhindern zu können, dass der Feuchtegehalt der Luft im Aufstellraum (Umgebungsluft) so weit erhöht wird, dass unerwünschte Kondensation von Wasserdampf insbesondere an kühlen Grenzflächen im Aufstellraum auftritt. Hierbei ist zu berücksichtigen, dass abhängig von der Transportspülmaschine je Maschine eine abzuführende Abluftmenge von 450 bis 550 m³/h anfällt.

Andererseits ist es beim Betrieb einer herkömmlichen Transportspülmaschine erforderlich, dass über sowohl die zulaufseitige als auch die auslaufseitige Öffnung der Maschine Luft eingesaugt und durch die Behandlungszonen geführt wird. Diese über die zulauf- und auslaufseitigen Öffnungen der Transportspülmaschine zugeführte Luft wird nach dem Passieren der Behandlungszonen anschließend über das bauseitige Abluftsystem nach außen abgeführt. Abhängig von dem Maschinentyp muss der Transportspülmaschine etwa 150 bis 200 m³/h Frischluft zulaufseitig zugeführt und in Transportrichtung gesehen durch die Wasch- und Klarspülzonen der Maschine bewegt werden. Auslaufseitig der Maschine wird etwa 300 bis 350 m³/h Frischluft zugeführt und entgegen der Transportrichtung durch die Trocknungszone bewegt. In beiden Fällen erwärmt sich die Luft und nimmt Feuchtigkeit auf. Diese mit Feuchtigkeit beladene (gesättigte) Luft kann nicht in den Aufstellraum der Transportspülmaschine abgegeben werden, sondern muss als Abluft über das bauseitige Abluftsystem aus dem Aufstellraum nach außen abgeführt werden, um das Raumklima im Aufstellraum nicht zu verändern.

Insbesondere für Spülküchen, in denen mehrere Transportspülmaschinen zum Teil gleichzeitig betrieben werden, ist das bauseitige Abluftsystem dementsprechend groß zu dimensionieren.

Problematisch ist dabei, dass es häufig - wenn überhaupt - nur mit größerem Aufwand und baulichen Maßnahmen möglich ist, eine bereits eingerichtete Spülküche nachträglich zu erweitern, wenn bei der Planung der Spülküche nicht bereits das bauseitige Abluftsystem entsprechend überdimensioniert ausgebildet wurde. Wenn andererseits die Spülküche im Inneren eines Gebäudes oder einer Einrichtung angeordnet ist, muss das Abluftkanalsystem der Abluftanlage - häufig über mehrere Stockwerke - geführt werden, um die beim Betrieb der Transportspülmaschine entstehende Abluft nach außen abführen zu können. In solchen Fällen nimmt das Abluftkanalsystem einen in der Regel nicht unerheblichen Raum ein, welcher nicht andersartig genutzt werden kann.

Durch die Erfindung soll die Aufgabe gelöst werden, eine Transportspülmaschine der eingangs genannten Art derart weiterzubilden, dass diese in einer möglichst einfach zu realisierenden Weise auch ohne ein nach außen führendes bauseitiges Abluftsystem im Aufstellraum betrieben werden kann, wobei gleichzeitig die Energieeffizienz der Maschine optimiert werden soll. Ferner soll ein entsprechendes Verfahren zum Betreiben einer solchen Transportspülmaschine angegeben werden.

Diese Aufgabe wird im Hinblick auf die Transportspülmaschine erfindungsgemäß durch den Gegenstand des unabhängigen Patentanspruches 1 gelöst.

Demgemäß wird eine Transportspülmaschine vorgeschlagen, welche insbesondere als gewerbliche Geschirr- oder Utensilienspülmaschine ausgebildet ist und mindestens eine Waschzone und mindestens eine Klarspülzone sowie eine Transportvorrichtung zum Transportieren von Spülgut durch die mindestens eine Wasch-Klarspülzone aufweist. Ferner ist ein maschinenseitiges Abluftsystem vorgesehen zum Abführen von Abluft aus der mindestens einen Wasch- und Klarspülzone.

Erfindungsgemäß ist dem Abluftsystem eine Trocknungseinrichtung zugeordnet zum kontinuierlichen oder bedarfsweisen Entziehen von Feuchtigkeit aus der mit dem Abluftsystem aus der Transportspülmaschine abzuführenden Abluft. Dabei ist vorgesehen, dass die Trocknungseinrichtung mindestens eine Sorptionseinheit mit einem reversibel dehydrierbaren Trockenmaterial aufweist. Ferner ist eine der mindestens einen Sorptionseinheit zugeordnete Heizeinheit vorgesehen zum bedarfsweisen Erwärmen des Trockenmaterials. Dem Abluftsystem ist mindestens ein der Trocknungseinrichtung nachgeschalteter und mit Wasser, insbesondere Frischwasser, gekühlter Wärmetauscher zugeordnet zum Übertragen von thermischer Energie von zumindest einem Teil der über das Abluftsystem aus der Transportspülmaschine abzuführenden Abluft auf das Kühlwasser des mindestens einen Wärmetauschers.

Die mit der erfindungsgemäßen Lösung erzielbaren Vorteile liegen auf der Hand: durch das Vorsehen eines maschinenseitigen Abluftsystems, dem eine Trocknungseinrichtung zum kontinuierlichen oder bedarfsweisen Entziehen von Feuchtigkeit aus der mit dem Abluftsystem aus der Transportspülmaschine abzuführenden Abluft zugeordnet ist, wird erreicht, dass im Unterschied zu herkömmlichen Transportspülmaschinen die Abluft am Ausgang des maschinenseitigen Abluftsystems derart konditionierbar ist, dass diese direkt in den Aufstellraum der Transportspülmaschine abgegeben werden kann, ohne dass dabei das Raumklima verändert wird. Dadurch ist es nicht mehr erforderlich, dass zum Betrieb der Transportspülmaschine das maschinenseitige Abluftsystem der Transportspülmaschine mit einem bauseitig vorgesehenen Abluftsystem verbunden werden muss, um die aus der Transportspülmaschine abgeführte Abluft nach außen abzuführen. Insbesondere kann somit die Transportspülmaschine auch problemlos in Räumlichkeiten betrieben werden, die nicht an einem bauseitigen Abluftsystem angeschlossen sind.

Hierbei ist vorgesehen, dass zumindest ein Teil der aus der Transportspülmaschine abzuführenden Abluft beispielsweise mit Hilfe eines Luftgebläses durch eine zu der Trocknungseinrichtung gehörende Sorptionseinheit geführt wird, welche ein reversibel dehydrierbares Trockenmaterial aufweist. Auf diese Weise wird zumindest ein Teil des in der Abluft vorhandenen Wasserdampfanteils durch das Trockenmaterial gebunden. Die getrocknete Abluft passiert anschließend einen dem Abluftsystem zugeordneten Wärmetauscher, in welcher sie abgekühlt wird, und kann dann direkt in den Aufstellraum der Transportspülmaschine abgegeben werden.

Die erfindungsgemäße Transportspülmaschine weist ferner eine der mindestens einen Sorptionseinheit zugeordnete Heizeinheit auf zum bedarfsweisen Erwärmen des Trockenmaterials der Sorptionseinheit. Durch Betreiben dieser Heizeinheit kann das Trockenmaterial der Sorptionseinheit regeneriert werden.

In einer bevorzugten Realisierung der erfindungsgemäßen Transportspülmaschine ist vorgesehen, dass der dem Abluftsystem zugeordnete Wärmetauscher einen mit einer Frischwasserzufuhrleitung der Transportspülmaschine verbundenen oder verbindbaren Frischwassereinlass und einen Frischwasserauslass aufweist, welcher mit einem der mindestens einen Klarspülzone zugeordneten Klarspüldüsensystem und/oder mit einem der mindestens einen Waschzone zugeordneten Waschtank verbunden oder verbindbar ist. Hiermit ist sichergestellt, dass zumindest ein Teil der in dem Wärmetauscher aus der Abluft entzogenen thermischen Energie zum Erwärmen des in der Klarspülzone zu versprühenden Frischwassers bzw. zum Erwärmen der in der Waschspülzone zu versprühenden Waschflüssigkeit verwendet wird, was die Energieeffizienz der Maschine optimiert.

Vorzugsweise weist das Abluftsystem der Transportspülmaschine einen Abluftventilator auf, wobei der Wärmetauscher des Abluftsystems vorzugsweise am saugseitigen Einlass des Abluftventilators angeordnet und ausgelegt ist, die aus den Behandlungszonen der Transportspülmaschine abgeführte Abluft durch Wärmeübertrag von der mit dem Abluftventilator abgesaugten Abluft auf das Kühlmedium des Wärmetauschers auf Raumtemperatur abzukühlen. Die Förderleistung des Abluftventilators ist vorzugsweise in Abhängigkeit von der pro Zeiteinheit aus der Transportspülmaschine abzuführenden Menge an Abluft steuerbar.

Die der Erfindung zugrunde liegende Aufgabe wird ferner durch ein Verfahren zum Betreiben einer Transportspülmaschine, insbesondere einer Transportspülmaschine der zuvor genannten Art, welche mindestens eine Waschzone und mindestens eine Klarspülzone sowie eine Transportvorrichtung zum Transportieren von Spülgut durch die mindestens eine Wasch- und Klarspülzone aufweist, gelöst.

Bei dem erfindungsgemäßen Verfahren wird während einer Adsorptionsphase Abluft aus der Transportspülmaschine derart durch eine ein reversibel dehydrierbares Trockenmaterial aufweisende Sorptionseinheit geleitet, dass das Trockenmaterial Feuchtigkeit aus dem Luftstrom aufnimmt, wobei zumindest ein Teil der thermischen Energie der durch die Sorptionseinheit geleiteten Abluft in einem mit Wasser, insbesondere Frischwasser, gekühlten Wärmetauscher auf das Kühlwasser des Wärmetauschers übertragen wird, und wobei anschließend das in dem Wärmetauscher erwärmte Kühlwasser in der mindestens einen Klarspülzone der Transportspülmaschine als Klarspülflüssigkeit und/oder in der mindestens einen Waschzone der Transportspülmaschine als Waschflüssigkeit versprüht wird.

Andererseits ist bei dem erfindungsgemäßen Verfahren vorgesehen, dass während einer Desorptionsphase das Trockenmaterial der Sorptionseinheit erhitzt und Abluft aus der Transportspülmaschine durch die das erhitzte Trockenmaterial aufweisende Sorptionseinheit derart geleitet wird, dass aus dem Trockenmaterial Feuchtigkeit desorbiert und zumindest ein Teil der in das Trockenmaterial zuvor eingebrachten thermischen Energie und zumindest ein Teil der aus dem Trockenmaterial desorbierten Feuchtigkeit mit Hilfe des durch die Sorptionseinheit geleiteten Luftstroms aus der Sorptionseinheit ausgetragen wird, wobei zumindest ein Teil der mit dem Luftstrom aus der Sorptionseinheit ausgetragenen thermischen Energie in dem Wärmetauscher auf das Kühlwasser des Wärmetauschers übertragen wird, und wobei anschließend das in dem Wärmetauscher erwärmte Kühlwasser in der mindestens einen Klarspülzone der Transportspülmaschine als Klarspülflüssigkeit und/oder in der mindestens einen Waschzone der Transportspülmaschine als Waschflüssigkeit versprüht wird.

Vorteilhafte Weiterbildungen der erfindungsgemäßen Transportspülmaschine sind in den abhängigen Ansprüchen 2 bis 12 und des erfindungsgemäßen Verfahrens in den abhängigen Ansprüchen 14 bis 21 angegeben.

In einer bevorzugten Realisierung der erfindungsgemäßen Lösung weist die Trocknungseinrichtung eine erste Sorptionseinheit mit einem reversibel dehydrierbaren Trockenmaterial und eine zweite Sorptionseinheit ebenfalls mit einem reversibel dehydrierbaren Trockenmaterial auf. Hierbei ist es von Vorteil, wenn das Abluftsystem der Transportspülmaschine einen der ersten Sorptionseinheit zugeordneten ersten Abluftventilator aufweist zum bedarfsweisen Ausbilden eines ersten Luftstroms derart, dass zumindest ein Teil der Abluft durch die erste Sorptionseinheit geführt wird. In diesem Zusammenhang ist es ferner von Vorteil, wenn zusätzlich zu dem ersten Abluftventilator auch ein der zweiten Sorptionseinheit zugeordneter zweiter Abluftventilator vorgesehen ist zum bedarfsweisen Ausbilden eines zweiten Luftstroms derart, dass zumindest ein Teil der Abluft durch die zweite Sorptionseinheit geführt wird. Die pro Zeiteinheit jeweils durch die erste und zweite Sorptionseinheit geleitete Abluftmenge ist unabhängig voneinander durch ein geeignetes Ansteuern des ersten und zweiten Abluftventilators einstellbar, vorzugsweise in Abhängig davon, ob sich die entsprechende Sorptionseinheit gerade in ihrer Adsorptionsphase oder in ihrer Desorptionsphase befindet.

Vorzugsweise weist dabei das Abluftsystem einen derart der ersten Sorptionseinheit zugeordneten ersten Wärmetauscher auf, dass beim Ausbilden des ersten Luftstroms zumindest ein Teil der durch die erste Sorptionseinheit geführten Abluft anschließend den ersten Wärmetauscher passiert. Gleichwohl ist es von Vorteil, wenn das Abluftsystem ferner einen derart der zweiten Sorptionseinheit zugeordneten zweiten Wärmetauscher aufweist, dass beim Ausbilden des zweiten Luftstroms die durch die zweite Sorptionseinheit geführte Abluft zumindest teilweise den zweiten Wärmetauscher passiert.

Bei dieser Ausführungsform ist es möglich, dass die erste und zweite Sorptionseinheit zueinander derart gegenphasig betrieben werden, dass bei der ersten Sorptionseinheit die Desorptionsphase durchgeführt und das Trockenmaterial der ersten Sorptionseinheit regeneriert wird, während bei der zweiten Sorptionseinheit die Adsorptionsphase durchgeführt wird und das Trockenmaterial der zweiten Sorptionseinheit Feuchtigkeit aus der Abluft der Transportspülmaschine aufnimmt.

Zum Ausführen der Desorptionsphase und zum Regenerieren des Trockenmaterials der Sorptionseinheit ist es von Vorteil, wenn die der mindestens einen Sorptionseinheit zugeordnete Heizeinheit derart ausgebildet ist, dass durch Zufuhr von elektrischer Energie und/oder Wärme die Heizeinheit das Trockenmaterial der Sorptionseinheit derart erwärmt, dass die zuvor von dem Trockenmaterial absorbierte Feuchtigkeit zumindest teilweise wieder von dem Trockenmaterial freigegeben wird. Denkbar hierbei ist es, wenn in der Desorptionsphase das Trockenmaterial der Sorptionseinheit durch Zufuhr von Wärmeenergie erhitzt wird, wobei zeitlich versetzt oder gleichzeitig mit der Wärmeenergiezufuhr die Abluft aus der Transportspülmaschine durch die Sorptionseinheit geleitet wird.

In diesem Zusammenhang ist es im Hinblick auf eine Optimierung der Energieeffizienz der Transportspülmaschine von Vorteil, wenn die der ersten Sorptionseinheit zugeordnete erste Heizeinheit ausgelegt ist, während einer Desorptionsphase der ersten Sorptionseinheit dem Trockenmaterial der ersten Sorptionseinheit Wärmeenergie zuzuführen, wobei die der ersten Sorptionseinheit zugeordnete erste Heizeinheit mit dem der zweiten Sorptionseinheit zugeordneten zweiten Wärmetauscher derart verbunden ist, dass zumindest ein Teil der bei der zweiten Sorptionseinheit frei werdenden Adsorptionswärme zum Erwärmen des Trockenmaterials der ersten Sorptionseinheit verwendet wird. Im übertragenen Sinne sollte vorzugsweise auch die der zweiten Sorptionseinheit zugeordnete zweite Heizeinheit ausgelegt sein, während einer Desorptionsphase der zweiten Sorptionseinheit dem Trockenmaterial der zweiten Sorptionseinheit Wärmeenergie zuzuführen, wobei die der zweiten Sorptionseinheit zugeordnete zweite Heizeinheit mit dem der ersten Sorptionseinheit zugeordneten ersten Wärmetauscher derart verbunden ist, dass zumindest ein Teil der bei der ersten Sorptionseinheit frei werdenden Adsorptionswärme zum Erwärmen des Trockenmaterials der zweiten Sorptionseinheit verwendet wird.

Schließlich ist es vorteilhaft, wenn eine Sensoreinrichtung zum Ermitteln der Feuchteaufnahmekapazität des Trockenmaterials der mindestens einen Sorptionseinheit und eine Steuereinrichtung vorgesehen sind, wobei die Steuereinrichtung ausgebildet ist, die Ausgabe eines entsprechenden optischen und/oder akustischen Hinweises oder eine Regeneration des Trockenmaterials zu veranlassen, wenn die ermittelte Freuchteaufnahmekapazität des Trockenmaterials einen zuvor vorgegebenen oder vorgebbaren Wert unterscheidet.

Insbesondere ist es somit möglich, dass während der Adsorptionsphase einer Sorptionseinheit die Feuchteaufnahmekapazität des Trockenmaterials der Sorptionseinheit ermittelt wird, wobei - abhängig von der ermittelten Feuchteaufnahmekapazität - vorzugsweise automatisch, und noch bevorzugter wahlweise automatisch, die Adsorptionsphase der Sorptionseinheit beendet und die Desorptionsphase der Sorptionseinheit eingeleitet wird.

Die Feuchteaufnahmekapazität des Trockenmaterials wird mit Hilfe der Sensoreinrichtung vorzugsweise kontinuierlich oder zu vorgebbaren Zeiten oder Ereignissen beispielsweise über das Gewicht des Trockenmaterials, über die Zeitdauer der Adsorptionsphase und/oder über den Feuchtegehalt der Luft am Ausgang der Sorptionseinheit ermittelt.

Alternativ oder zusätzlich zu dem zuletzt genannten Aspekt ist es auch denkbar, dass mit Hilfe der Sensoreinrichtung während der Desorptionsphase einer Sorptionseinheit die während der Desorptionsphase aus dem Trockenmaterial der Sorptionseinheit desorbierte Menge an Feuchtigkeit ermittelt wird, wobei abhängig von der ermittelten Feuchtigkeitsmenge vorzugsweise automatisch, und noch bevorzugter wahlweise automatisch, die Desorptionsphase der Sorptionseinheit beendet und die Adsorptionsphase der Sorptionseinheit eingeleitet wird. Die während der Desorptionsphase aus dem Trockenmaterial der Sorptionseinheit desorbierte Menge an Feuchtigkeit wird vorzugsweise kontinuierlich oder zu vorgebbaren Zeiten oder Ereignissen über das Gewicht des Trockenmaterials, über die Zeitdauer der Desorptionsphase und/oder über den Feuchtegehalt der Luft am Ausgang der Sorptionseinheit ermittelt.

Andererseits ist es denkbar, dass mit Hilfe der Sensoreinrichtung vorzugsweise kontinuierlich oder zu vorgebbaren Zeiten oder Ereignissen der Feuchtegehalt der Luft in beispielsweise der mindestens einen Wasch- oder Klarspülzone der Transportspülmaschine ermittelt wird, wobei während der Adsorptionsphase die pro Zeiteinheit durch die Sorptionseinheit geleitet Luftvolumenmenge derart eingestellt wird, dass der ermittelte Feuchtegehalt der Luft einen vorgegeben oder vorgebbaren Sollwert nicht überschreitet.

Nachfolgend werden Ausführungsbeispiele der erfindungsgemäßen Lösung mit Bezug auf die beiliegenden Zeichnungen näher beschrieben.

In den Zeichnungen zeigen:
- Fig. 1: schematisch eine Transportspülmaschine gemäß einer ersten exemplarischen Ausführungsform der Erfindung;
- Fig. 2: schematisch eine Transportspülmaschine gemäß einer zweiten exemplarischen Ausführungsform der Erfindung; und
- Fig. 3: schematisch eine Transportspülmaschine gemäß einer dritten exemplarischen Ausführungsform der Erfindung.

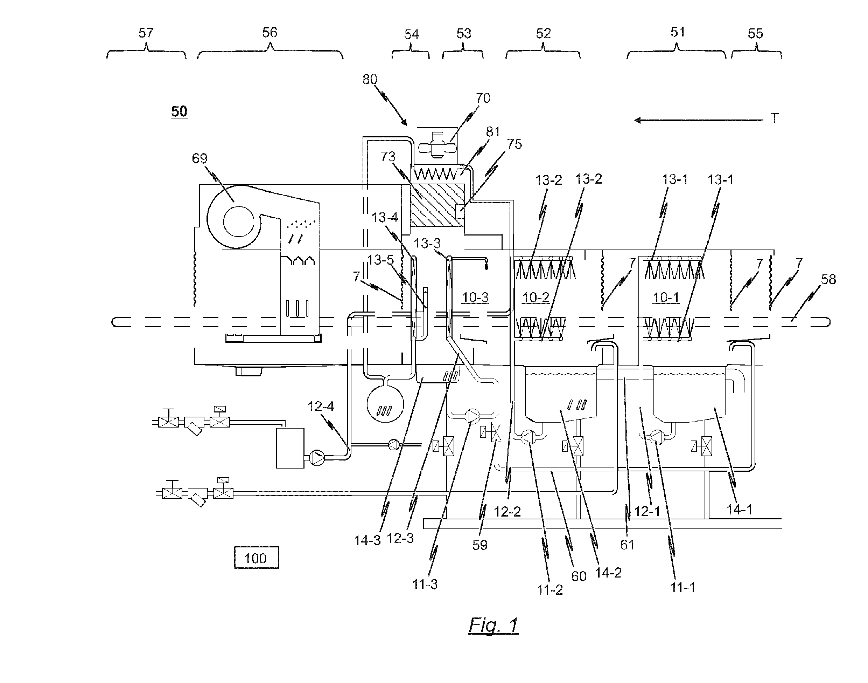

In Fig. 1 ist in einer schematischen Längsschnittansicht ein Beispiel für eine nach den Lehren der vorliegenden Erfindung ausgebildete Transportspülmaschine 50 gezeigt. Die Transportspülmaschine 50 gemäß der Darstellung in Fig. 1 weist eine Vorwaschzone 51 sowie eine Hauptwaschzone 52 auf, welche in der Transportrichtung T des in Fig. 1 nicht dargestellten Spülgutes gesehen nach der Vorwaschzone 51 angeordnet ist. In Transportrichtung T gesehen nach der Hauptwaschzone 52 ist bei der in Fig. 1 dargestellten Transportspülmaschine 50 eine Nachwasch- bzw. Vorspülzone 53 und eine der Nachwasch- bzw. Vorspülzone 53 nachgeschaltete Klarspülzone 54 angeordnet.

Bei der dargestellten Transportspülmaschine 50 sind zumindest die Vorwaschzone 51 sowie die Hauptwaschzone 52 jeweils als rezirkulierendes Waschsystem 10-1 bzw. rezirkulierendes Waschsystem 10-2 ausgebildet.

Das entweder unmittelbar auf einem Transportband 58 aufgenommene Spülgut oder durch Körbe gehaltene Spülgut läuft in der Transportrichtung T durch einen Einlauftunnel 55, die sich daran anschließende Vorwaschzone 51, die Hauptwaschzone 52, die Nachwaschzone 53, die Klarspülzone 54 und eine Trocknungszone 56 in eine Auslaufstrecke 57 ein. Bei der in Fig. 1 dargestellten Transportspülmaschine 50 weist die Trocknungszone 56 ein Trocknungsgebläse 69 auf, mit welchem vorzugsweise erwärmte Trocknungsluft auf das sich in der Trocknungszone 56 befindende Spülgut geblasen wird.

Den Wasch- und Klarspülzonen 51, 52, 53, 54 der Transportspülmaschine 50 sind jeweils Sprühdüsen 13-1, 13-2, 13-3, 13-4, 13-5 zugeordnet, über welche Flüssigkeit auf das Spülgut gesprüht wird, welches von dem Transportband 58 durch die jeweiligen Behandlungszonen 51, 52, 53, 54 transportiert wird. Zumindest der Vorwaschzone 51, der Hauptwaschzone 52 und der Nachwasch- bzw. Vorspülzone 53 ist jeweils ein Tank (Waschtank 14-1, 14-2, 14-3) zugeordnet, in welchem versprühte Waschflüssigkeit aufgenommen und/oder Waschflüssigkeit für die Sprühdüsen 13-1, 13-2, 13-3 der betreffenden Zonen 51, 52, 53 bereitgestellt wird.

Die Vorwaschzone 51, die Hauptwaschzone 52 und die Nachwaschzone 53 der Transportspülmaschine 50 gemäß der in Fig. 1 dargestellten ersten Ausführungsform der Erfindung weisen jeweils ein Waschsystem 10-1, 10-2, 10-3 auf. Jedes Waschsystem 10-1, 10-2, 10-3 setzt sich aus einer Waschpumpe 11-1, 11-2, 11-3, einem mit der Waschpumpe 11-1, 11-2, 11-3 verbundenen Leitungssystem 12-1, 12-2, 12-3 und den mit dem Leitungssystem 12-1, 12-2, 12-3 verbundenen Sprühdüsen 13-1, 13-2, 13-3 zusammen.

Des Weiteren ist eine in den Zeichnungen nur schematisch dargestellte Steuereinrichtung 100 vorgesehen, welche bei der als Transportspülmaschine 50 ausgebildeten Ausführungsform der Erfindung (unter anderem) dazu dient, die jeweiligen Waschpumpen 11-1, 11-2, 11-3 der Waschsysteme 10-1, 10-2, 10-3 während eines Waschprozesses geeignet anzusteuern, um zumindest zeitweise über das zugehörige Leitungssystem 12-1, 12-2, 12-3 Waschflüssigkeit zu den Sprühdüsen 13-1, 13-2, 13-3 des zum jeweiligen Waschsystem 10-1, 10-2, 10-3 zugehörigen Düsensystems zuzuführen.

Bei der in Fig. 1 dargestellten Transportspülmaschine 50 wird Klarspülflüssigkeit in Form von Frischwasser, welches mit weiteren chemischen Zusätzen, wie beispielsweise Klarspüler, versetzt sein kann, über die oberhalb und unterhalb des Transportbandes 58 angeordnete Sprühdüsen 13-4 der Klarspülzone 54 auf das in Fig. 1 nicht dargestellte Spülgut gesprüht. Wie in Fig. 1 dargestellt, können in der Klarspülzone 54 auch seitlich angeordnete Sprühdüsen 13-5 vorgesehen sein.

Ein Teil der in der Klarspülzone 54 versprühten Klarspülflüssigkeit wird über ein Kaskadensystem entgegen der Transportrichtung T des Spülgutes von Zone zu Zone transportiert. Der restliche Teil wird über ein Ventil 59 und eine Bypassleitung 60 direkt in den Vorwaschtank 14-1 der Vorwaschzone 51 geleitet.

Die in der Klarspülzone 54 versprühte Klarspülflüssigkeit wird in dem Tank (Nachwasch- bzw. Vorspültank 14-3) der Nachwasch- bzw. Vorspülzone 53 aufgefangen, von welchem sie über die zu dem Waschsystem 10-3 der Nachwasch- bzw. Vorspülzone 53 gehörende Waschpumpe 11-3 zu den Sprühdüsen 13-3 (Nachwasch- bzw. Vorspüldüsen) der Nachwasch- bzw. Vorspülzone 53 gefördert wird. In der Nachwasch- bzw. Vorspülzone 53 wird Waschflüssigkeit von dem Spülgut abgespült.

Die hierbei anfallende Flüssigkeit fließt in den Waschtank 14-2 der Hauptwaschzone 52, wird üblicherweise mit einem Reiniger versehen und mit Hilfe einer zu dem Waschsystem 10-2 der Hauptwaschzone 52 gehörenden Waschpumpe 11-2 über die Sprühdüsen 13-2 (Waschdüsen) des zur Hauptwaschzone 52 gehörenden Waschsystems 10-2 auf das Spülgut gesprüht.

Von dem Waschtank 14-2 der Hauptwaschzone 52 fließt die Waschflüssigkeit anschließend in den Vorwaschtank 14-1 der Vorwaschzone 51. Die in dem Vorwaschtank 14-1 gesammelte Waschflüssigkeit wird in der Vorwaschzone 51 mit Hilfe einer zu dem Waschsystem 10-1 der Vorwaschzone 51 gehörenden Waschpumpe 11-1 über die Sprühdüsen 13-1 (Vorwaschdüsen) des zu der Vorwaschzone 51 gehörenden Waschsystems 10-1 auf das Spülgut gesprüht, um grobe Verunreinigungen von dem Spülgut zu entfernen.

Ein Teil der in der Hauptwaschzone 52 versprühten Waschflüssigkeit gelangt über ein Überlaufsystem 61 in den Waschtank (Vorwaschtank 14-1) der Vorwaschzone 51. Wie auch die Hauptwaschzone 52 kann die Vorwaschzone 51 mit einem als Flächensieb ausgebildeten Tankabdecksieb ausgerüstet sein. Dieses Tankabdecksieb ist vorzugsweise oberhalb des Waschtankes (Vorwaschtank 14-1) der Vorwaschzone 51 angeordnet, um Schmutzpartikel von der in der Vorwaschzone 51 versprühten und durch Schwerkraft in den Vorwaschtank 14-1 zurückfließenden Waschflüssigkeit abzutrennen. Die Maschenweite des Tankabdecksiebes liegt vorzugsweise in einem Bereich zwischen ca. 1 mm bis 4 mm.

Durch die in der Regel erwärmte Wasch- und Klarspülflüssigkeit entstehen beim Versprühen dieser innerhalb der Wasch- und Klarspülzonen 51, 52, 53, 54 der Transportspülmaschine 50 Dampfschwaden (Wrasen). Um ein Austreten dieser Dampfschwaden aus der Transportspülmaschine 50 zu verhindern, sind bei der in Fig. 1 dargestellten Ausführungsform die einzelnen Behandlungszonen und insbesondere die Wasch- und Klarspülzonen 51, 52, 53, 54 mit Vorhängen 7 abgetrennt.

Um die während des Betriebs der Transportspülmaschine 50 entstehenden Dampfschwaden (Wrasen) sowie feuchte, warme Luft aus dem Inneren der Transportspülmaschine 50 abzuführen, ist die Transportspülmaschine 50 mit einem maschinenseitigen Abluftsystem 80 ausgerüstet, welches ausgelegt ist, zumindest einen Großteil der beim Betrieb der Transportspülmaschine 50 in den Behandlungszonen 51, 52, 53, 54, 56 entstehenden warmen und feuchten Luft als Abluft aus den jeweiligen Behandlungszonen 51, 52, 53, 54, 56 der Maschine abzuführen. Bei der in Fig. 1 dargestellten Ausführungsform der erfindungsgemäßen Transportspülmaschine 50 ist das zentrale Abluftsystem 80 im Bereich bei der Nachwasch- bzw. Vorspülzone 53 und der Klarspülzone 54 vorgesehen. Das Abluftsystem 80 weist in der dargestellten Ausführungsform einen einzigen Abluftventilator 70 auf, der über die Steuereinrichtung 100 ansteuerbar ist, um die Leistung des Abluftventilators 70 einstellen zu können.

Dem Abluftsystem 80 ist ferner eine vorzugsweise ebenfalls über die Steuereinrichtung 100 ansteuerbare Trocknungseinrichtung zugeordnet, welche dazu dient, kontinuierlich oder bedarfsweise Feuchtigkeit aus der mit dem Abluftsystem 80 aus der Transportspülmaschine 50 abzuführenden Abluft zu entziehen und somit die aus der Transportspülmaschine 50 abzuführenden Abluft zu trocknen.

Im Einzelnen weist die bei der in Fig. 1 dargestellten Ausführungsform zum Einsatz kommende Trocknungseinrichtung eine Sorptionseinheit 73 auf. Hierbei handelt es sich um einen Behälter, der mit einem reversibel dehydrierbaren Trockenmaterial gefüllt ist. Bei diesem Trockenmaterial handelt es sich vorzugsweise um ein Sorptionsmittel, welches Zeolith aufweist.

Zeolith ist ein kristallines Mineral, das in einer Gerüststruktur Silizium- und Aluminiumoxide enthält. Diese regelmäßige Gerüststruktur enthält Hohlräume, in welchen Wassermoleküle unter Wärmefreisetzung adsorbiert werden können. Innerhalb der Gerüststruktur sind die Wassermoleküle starken Feldkräften ausgesetzt, deren Stärke von der bereits in der Gitterstruktur enthaltenen Wassermenge und der Temperatur des Zeolith-Materials abhängt.

Als Trockenmaterial eignet sich insbesondere Zeolith vom Typ Y, da dieses Material auch unter extremen hydrothermalen Bedingungen besonders stabil ist.

Der aus der Transportspülmaschine 50 abzuführenden Abluft wird in der Trocknungseinrichtung Feuchtigkeit entzogen, indem zumindest ein Teil dieser Abluft durch die Sorptionseinheit 73 geführt wird. Dabei adsorbiert das Trockenmaterial (Zeolith) Feuchtigkeit aus der Abluft, welche in die Struktur des Trockenmaterials eingebunden wird. Während dieser Adsorptionsphase wird auch Adsorptionswärme freigegeben, infolgedessen der Anteil der Abluft, welcher die Sorptionseinheit 73 passiert, entsprechend erwärmt wird.

In der Adsorptionsphase kommt der Sorptionseinheit 73 somit eine Doppelfunktion zu: Zum einen wird, wenn Abluft durch die Sorptionseinheit 73 geführt wird, zumindest ein Teil des in der Abluft vorhandenen Wasserdampfs durch das Trockenmaterial gebunden, so dass die die Sorptionseinheit 73 passierende Abluft entsprechend getrocknet wird. Zum anderen erwärmt sich die durch die Sorptionseinheit 73 geführte Abluft, da beim Adsorbieren von Feuchtigkeit von dem Trockenmaterial Wärme freigesetzt wird. Somit wird die durch die Sorptionseinheit 73 geführte Abluft nicht nur getrocknet, sondern es erfolgt auch gleichzeitig eine Temperaturerhöhung der Luft.

Die nach dem Passieren der Sorptionseinheit 73 getrocknete, erwärmte Abluft wird anschließend einem der Trocknungseinrichtung nachgeschalteten und mit Wasser, insbesondere Frischwasser, gekühlten Wärmetauscher 81 zugeführt, um thermische Energie von zumindest einem Teil der erwärmten Abluft auf das Kühlwasser des Wärmetauschers 81 zu übertragen. Auf diese Weise kann die in der Sorptionseinheit 73 bereits zumindest teilweise getrocknete Abluft entsprechend abgekühlt und konditioniert werden, so dass die Abluft anschließend direkt in den Aufstellraum der Transportspülmaschine 50 abgegeben werden kann, ohne dass es dabei zu einer Veränderung des Raumklimas kommt.

In dem der Sorptionseinheit 73 nachgeschalteten Wärmetauscher 81 wird die Abluft nicht nur vorzugsweise auf Raumtemperatur (22 °C bis 25 °C) abgekühlt, sondern ggf. auch weiter getrocknet, indem in der Abluft ursprünglich vorhandene Feuchtigkeit zumindest teilweise an den kühlen Wärmetauscherflächen kondensiert.

Dadurch, dass bei der Transportspülmaschine 50 die Abluft am Ausgang des maschinenseitigen Abluftsystems 80 bis auf Raumtemperatur abgekühlt ist, ist es nicht mehr erforderlich, die Abluft über ein bauseitiges Abluftsystem nach außen abzuführen, sondern kann direkt in den Aufstellraum der Transportspülmaschine abgegeben werden, ohne dass das Raumklima im Aufstelltraum negativ beeinflusst wird.

Wie bereits dargelegt dient der dem Abluftsystem 80 zugeordnete Wärmetauscher 81 zum Übertragen von thermischer Energie von zumindest einem Teil der über das Abluftsystem 80 aus der Transportspülmaschine 50 abzuführenden Abluft auf das Kühlwasser des dem Abluftsystem 80 zugeordneten Wärmetauschers 81. Im Einzelnen, und wie es der Darstellung der Fig. 1 entnommen werden kann, weist der dem Abluftsystem 80 zugeordnete Wärmetauscher 81 einen mit einer Frischwasserzufuhrleitung 12-4 der Transportspülmaschine 50 verbundenen bzw. verbindbaren Frischwassereinlass und einen Frischwasserauslass auf, welcher mit den in der Klarspülzone 54 angeordneten Klarspüldüsen 13-4, 13-5 verbunden bzw. verbindbar ist. Denkbar hierbei wäre es auch, dass der Frischwasserauslass des Wärmetauschers 81 mit einem Waschtank 14-1, 14-2, 14-3 der Waschzonen 51, 52, 53 verbunden oder verbindbar ist, um die dort enthaltene Waschflüssigkeit bei Bedarf zu regenerieren, oder um den Waschtank 14-1, 14-2, 14-3 beim Start der Transportspülmaschine mit Waschflüssigkeit zu füllen.

Ferner ist der Darstellung in Fig. 1 zu entnehmen, dass das Abluftsystem 80 einen Abluftventilator 70 aufweist, wobei der Wärmetauscher 81 des Abluftsystems 80 vorzugsweise am saugseitigen Einlass des Abluftventilators 70 angeordnet und ausgelegt ist, die aus der Wasch- und Klarspülzone 51, 52, 53, 54 sowie ggf. auch aus der Trocknungszone 56 der Transportspülmaschine 50 abzuführende Abluft auf Raumtemperatur abzukühlen, und zwar indem thermische Energie (Wärme) von der mit dem Abluftventilator abgesaugten Abluft auf das Kühlmedium (Frischwasser) des Wärmetauschers 81 übertragen wird.

Demgemäß ist es bei der in Fig. 1 dargestellten exemplarischen Ausführungsform der erfindungsgemäßen Transportspülmaschine 50 nicht erforderlich, dass die über das Abluftsystem 80 abgeführte Abluft nach außen abgeführt wird. Vielmehr kann diese Abluft, nachdem sie den Wärmetauscher 81 passiert hat, wieder in den Aufstellraum der Transportspülmaschine 50 eingebracht werden.

Die Trocknungseinrichtung der in Fig. 1 dargestellten Transportspülmaschine 50 weist zusätzlich zu der Sorptionseinheit 73 auch eine Heizeinheit 75 auf, um während einer Desorptionsphase das Trockenmaterial der Sorptionseinheit 73 zu erwärmen. Der Teilprozess der Desorption wird im Anschluss an die Adsorptionsphase durchgeführt, und zwar indem der Sorptionseinheit 73 Wärme, z.B. in Form von elektrischer Energie, Wasserdampf, Gas oder Heißwasser, zugeführt wird. Gleichzeitig oder zeitlich versetzt wird durch die Sorptionseinheit 73 Abluft aus der Transportspülmaschine 50 geblasen, welche das als Wasserdampf aus dem Trockenmaterial desorbierte Wasser aufnimmt.

Im Einzelnen wird während der Desorptionsphase das Trockenmaterial der Sorptionseinheit 73 erhitzt und Luft aus den Behandlungszonen der Transportspülmaschine 50 durch die das erhitzte Trockenmaterial aufweisende Sorptionseinheit 73 derart geleitet, dass aus dem Trockenmaterial Feuchtigkeit desorbiert und zumindest ein Teil der in das Trockenmaterial zuvor eingebrachten thermischen Energie sowie zumindest ein Teil der aus dem Trockenmaterial desorbierten Feuchtigkeit mit Hilfe des durch die Sorptionseinheit 73 geleiteten Luftstroms aus der Sorptionseinheit 73 ausgetragen wird. Zumindest ein Teil der mit dem Luftstrom aus der Sorptionseinheit 73 ausgetragenen thermischen Energie wird dann in dem mit Wasser, insbesondere Frischwasser, gekühlten Wärmetauscher 81 auf das Kühlwasser des Wärmetauschers 81 übertragen.

In der Desorptionsphase wird der durch die das erhitzte Trockenmaterial aufweisende Sorptionseinheit 73 geleitete Luftstrom anschließend derart in dem Wärmetauscher 81 abgekühlt, dass zumindest ein Teil der zuvor aus dem Trockenmaterial desorbierten und mit dem Luftstrom aus der Sorptionseinheit 73 ausgetragenen Feuchtigkeit in dem Wärmetauscher 81 kondensiert, so dass die bei der Kondensation freiwerdende Kondensationsenthalpie zum Erwärmen des Kühlwassers des Wärmetauschers 81 verwendet werden kann.

Vorzugsweise fließt in dem Wärmetauscher 81 das Kühlwasser im Gegenstrom, so dass das Kühlwasser auf bis zu 75°C aufgeheizt werden kann. Wie bereits ausgeführt, kann dieses in dem Wärmetauscher 81 aufgeheizte Frischwasser entweder zur Befüllung der Waschtanks 14-1, 14-2, 14-3 oder zur permanenten Frischwasserversorgung der Transportspülmaschine 50 verwendet werden.

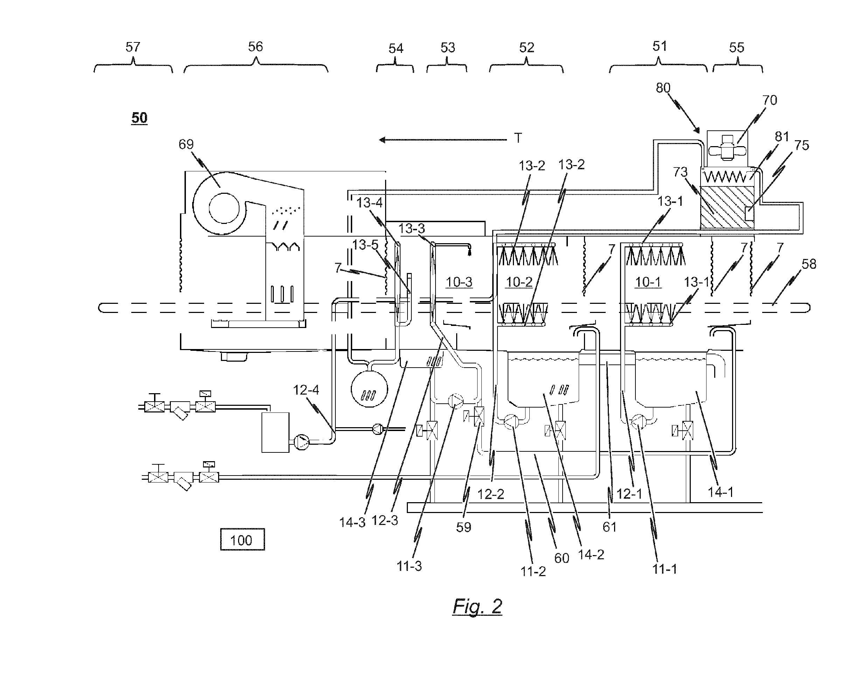

In Fig. 2 ist ein weiteres Ausführungsbeispiel der erfindungsgemäßen Lösung dargestellt. Im Unterschied zu der in Fig. 1 dargestellten Ausführungsform ist bei der in Fig. 2 dargestellten Transportspülmaschine 50 das maschinenseitige Abluftsystem 80 nicht im Bereich der Nachwasch- und Klarspülzonen 53, 54, sondern im Bereich des Einlauftunnels 55 und der sich daran anschließende Vorwaschzone 51 vorgesehen, um gezielt in diesem Bereich die beim Betrieb der Transportspülmaschine 50 entstehenden Dampfschwaden sowie die feuchte, warme Luft abzuführen. Dadurch kann besonders wirksam verhindert werden, dass Wrasen über den Einlauftunnel 55 der Transportspülmaschine austreten.

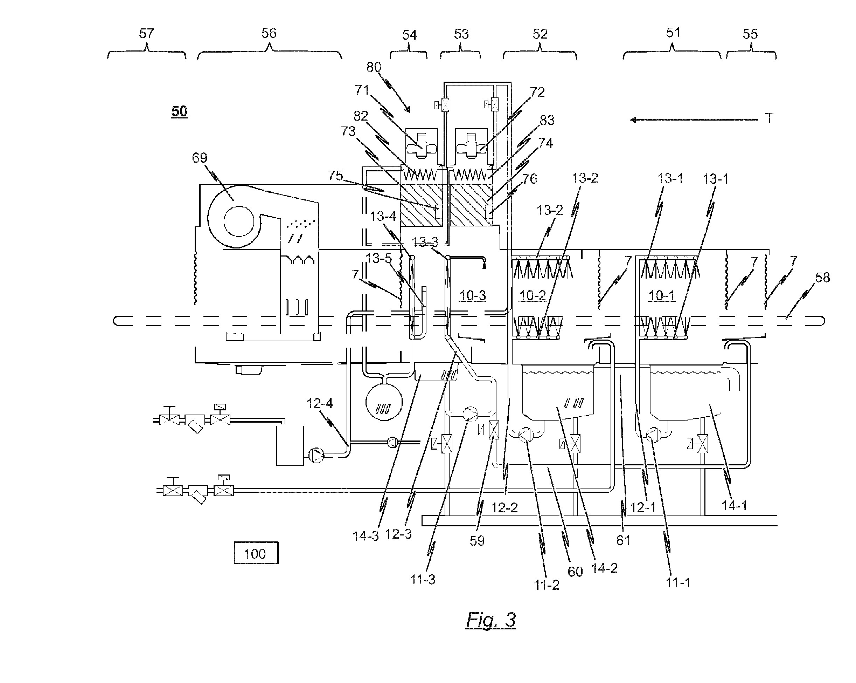

Eine weitere Realisierung der erfindungsgemäßen Lösung ist schematisch in Fig. 3 dargestellt. Bei dieser Ausführungsform ist - wie auch bei der in Fig. 1 dargestellten Ausführungsform - das maschinenseitige Abluftsystem 80 im Bereich der Nachwasch- und Klarspülzonen 53, 54 vorgesehen. Im Unterschied zu der in Fig. 1 gezeigten Ausführungsform allerdings weist bei der in Fig. 3 dargestellten Ausführungsform die Trocknungseinrichtung eine erste Sorptionseinheit 73 mit einem reversibel dehydrierbaren Trockenmaterial und eine zusätzliche, zweite Sorptionseinheit 74 ebenfalls mit einem reversibel dehydrierbaren Trockenmaterial auf. Ferner sind anstelle eines gemeinsamen Abluftventilators 70 (vgl. Fig. 1) ein der ersten Sorptionseinheit 73 zugeordneter erster Abluftventilator 71 sowie ein der zweiten Sorptionseinheit 74 zugeordneter zweiter Abluftventilator 72 vorgesehen. Der erste Abluftventilator 71 dient zum bedarfsweisen Ausbilden eines ersten Luftstroms derart, dass zumindest ein Teil der aus der Transportspülmaschine abzuführenden Abluft durch die erste Sorptionseinheit 73 geführt wird. Der zweite Abluftventilator 72 dient zum bedarfsweisen Ausbilden eines zweiten Luftstroms, und zwar derart, dass zumindest ein Teil der Abluft durch die zweite Sorptionseinheit 74 geführt wird.

Bei der in Fig. 3 dargestellten Transportspülmaschine 50 kommt anstelle des Wärmetauschers 81 (vgl. Fig. 1) ein der ersten Sorptionseinheit 73 zugeordneter erster Wärmetauscher 82 zum Einsatz. Dieser erste Wärmetauscher 82 ist in Bezug zu der ersten Sorptionseinheit 73 und in Bezug zu dem ersten Abluftventilator 71 derart angeordnet, dass bei Ausbilden des ersten Luftstroms zumindest ein Teil der durch die erste Sorptionseinheit 73 geführten Abluft anschließend den ersten Wärmetauscher 82 passiert.

Ferner ist ein der zweiten Sorptionseinheit 74 zugeordneter zweiter Wärmetauscher 83 vorgesehen, welcher dazu dient, dass beim Ausbilden des zweiten Luftstroms die durch die zweite Sorptionseinheit 74 geführte Abluft zumindest teilweise den zweiten Wärmetauscher 83 passiert.

Vorzugsweise werden die erste Sorptionseinheit 73 und die zweite Sorptionseinheit 74 zueinander derart gegenphasig betrieben, dass bei der ersten Sorptionseinheit 73 eine Desorptionsphase durchgeführt und das Trockenmaterial der ersten Sorptionseinheit 73 regeneriert wird, während bei der zweiten Sorptionseinheit 74 die Adsorptionsphase durchgeführt wird und das Trockenmaterial der zweiten Sorptionseinheit 74 Feuchtigkeit aus der Abluft der Transportspülmaschine 50 aufnimmt. Diese Phasen wechseln sich ab, vorzugsweise ohne Pausen, damit kontinuierlich der aus der Transportspülmaschine 50 abzuführenden Abluft Feuchtigkeit entzogen werden kann. Hierbei ist es von Vorteil, wenn die jeweiligen Desorptions- bzw. Adsorptionsphasen maximal 30 Minuten andauern, damit entsprechend baulich begrenzte Sorptionseinheiten 73, 74 zum Einsatz kommen können.

Bei der in Fig. 3 dargestellten Ausführungsform der Transportspülmaschine 50 sind der erste und zweite Wärmetauscher 82, 83 jeweils mit Wasser, insbesondere Frischwasser, gekühlt und weisen einen mit einer Frischwasserzufuhrleitung 12-4 verbundenen oder verbindbaren Einlass und einen mit dem der Klarspülzone 54 zugeordneten Klarspüldüsensystem verbundenen oder verbindbaren Auslass auf.

Hierbei ist es denkbar, dass der erste Wärmetauscher 82 nur dann mit der Frischwasserzufuhrleitung 12-4 verbunden ist, wenn sich die erste Sorptionseinheit 73 in der Desorptionsphase befindet, während der zweite Wärmetauscher 83 nur dann mit der Frischwasserzufuhrleitung 12-4 verbunden ist, wenn sich die zweite Sorptionseinheit 74 in der Desorptionsphase befindet.

Vorzugsweise fließt in den Wärmetauschern 82, 83 das Kühlwasser im Gegenstrom, so dass das Kühlwasser auf bis zu 75°C aufgeheizt werden kann. Wie auch bei der in Fig. 1 dargestellten Ausführungsform kann dieses in den Wärmetauschern 82, 83 aufgeheizte Frischwasser auch zur Befüllung der Waschtanks 14-1, 14-2, 14-3 oder zur permanenten Frischwasserversorgung der Transportspülmaschine 50 verwendet werden.

Bei der in Fig. 3 exemplarisch dargestellten Transportspülmaschine 50 ist ferner eine der ersten Sorptionseinheit 73 zugeordnete erste Heizeinheit 75 vorgesehen zum bedarfsweisen Erwärmen des Trockenmaterials der ersten Sorptionseinheit 73, wenn sich die erste Sorptionseinheit 73 in der Desorptionsphase befindet. Ferner ist eine der zweiten Sorptionseinheit 74 zugeordnete zweite Heizeinheit 76 vorgesehen, welche zum bedarfsweisen Erwärmen des Trockenmaterials der zweiten Sorptionseinheit 74 dient, wenn sich die zweite Sorptionseinheit 74 in der Desorptionsphase befindet.

Denkbar hierbei ist es, dass die der ersten Sorptionseinheit 73 zugeordnete erste Heizeinheit 75 ausgelegt ist, während einer Desorptionsphase der ersten Sorptionseinheit 73 dem Trockenmaterial der ersten Sorptionseinheit 73 Wärmeenergie zuzuführen, wobei die der ersten Sorptionseinheit 73 zugeordnete erste Heizeinheit 75 mit dem der zweiten Sorptionseinheit 74 zugeordneten zweiten Wärmetauscher 83 derart verbunden ist, dass zumindest ein Teil der während der Adsorptionsphase bei der zweiten Sorptionseinheit 74 frei werdenden Adsorptionswärme zum Erwärmen des Trockenmaterials der ersten Sorptionseinheit 73 verwendet wird. Im übertragenen Sinne ist es ferner bevorzugt, wenn die der zweiten Sorptionseinheit 74 zugeordnete zweite Heizeinheit 76 ausgelegt ist, während einer Desorptionsphase der zweiten Sorptionseinheit 74 dem Trockenmaterial der zweiten Sorptionseinheit 74 Wärmeenergie zuzuführen, wobei die der zweiten Sorptionseinheit 74 zugeordnete zweite Heizeinheit 76 mit dem der ersten Sorptionseinheit 73 zugeordneten ersten Wärmetauscher 82 derart verbunden ist, dass zumindest ein Teil der während der Adsorptionsphase bei der ersten Sorptionseinheit 73 frei werdenden Adsorptionswärme zum Erwärmen des Trockenmaterials der zweiten Sorptionseinheit 74 verwendet wird.

Die bei der erfindungsgemäßen Transportspülmaschine 50 vorgesehene Steuereinrichtung 100 ist ausgelegt, insbesondere um die/den entsprechende(n) Abluftventilator(en) 70, 71, 72 des Abluftsystems 80sowie die entsprechenden Heizeinheit(en) 75, 76 der Sorptionseinheit(en) 73, 74 geeignet anzusteuern derart, dass
i) während einer Adsorptionsphase Abluft aus der Transportspülmaschine 50 durch eine der ggf. mehreren Sorptionseinheiten 73, 74 derart geleitet wird, dass das Trockenmaterial der entsprechenden Sorptionseinheit 73, 74 Feuchtigkeit aus dem Luftstrom aufnimmt; und dass
ii) während einer Desorptionsphase das Trockenmaterial der einen Sorptionseinheit 73, 74 erhitzt und Abluft aus der Transportspülmaschine 50 durch die das erhitzte Trockenmaterial aufweisende Sorptionseinheit 73, 74 geleitet wird derart, dass aus dem Trockenmaterial Feuchtigkeit desorbiert und zumindest ein Teil der in das Trockenmaterial zuvor eingebrachten thermischen Energie und zumindest ein Teil der aus dem Trockenmaterial desorbierten Feuchtigkeit mit Hilfe des durch die Sorptionseinheit 73, 74 geleiteten Luftstroms aus der Sorptionseinheit 73, 74 ausgetragen wird.

Dabei wird anschließend zumindest ein Teil der mit dem Luftstrom aus der Sorptionseinheit 73, 74 ausgetragenen thermischen Energie in dem entsprechenden mit Wasser, insbesondere Frischwasser, gekühlten Wärmetauscher 81, 82, 83 auf das Kühlwasser des Wärmetauschers 81, 82, 83 übertragen, wobei anschließend das in dem Wärmetauscher 81, 82, 83 erwärmte Kühlwasser in der Klarspülzone 54 der Transportspülmaschine 50 als Klarspülflüssigkeit versprüht wird.

Die Erfindung ist nicht auf die in Zusammenhang mit den Zeichnungen beschriebenen Ausführungsformen beschränkt.

So ist es beispielsweise denkbar, dass eine Sensoreinrichtung vorgesehen ist zum Ermitteln der Feuchteaufnahmekapazität des Trockenmaterials der mindestens einen Sorptionseinheit 73, 74.

Ferner ist es denkbar, dass die Steuereinrichtung 100 ausgebildet ist, die Ausgabe eines entsprechenden optischen und/oder akustischen Hinweises oder eine Regeneration des Trockenmaterials zu veranlassen, wenn die ermittelte Feuchteaufnahmekapazität des Trockenmaterials einen zuvor vorgegebenen oder vorgebbaren Wert unterschreitet.

## Patentansprüche

1. Transportspülmaschine (50), welche insbesondere als gewerbliche Geschirr- oder Utensilienspülmaschine ausgebildet ist und mindestens eine Waschzone (51, 52, 53) und mindestens eine Klarspülzone (54) sowie eine Transportvorrichtung (58) zum Transportieren von Spülgut durch die mindestens eine Wasch- und Klarspülzone (51, 52, 53, 54) aufweist, wobei ferner ein Abluftsystem (80) vorgesehen ist zum Abführen von Abluft aus der mindestens einen Wasch- und Klarspülzone (51, 52, 53, 54),
**dadurch gekennzeichnet,dass**
dem Abluftsystem (80) eine Trocknungseinrichtung zugeordnet ist zum kontinuierlichen oder bedarfsweisen Entziehen von Feuchtigkeit aus der mit dem Abluftsystem (80) aus der Transportspülmaschine (50) abzuführenden Abluft, wobei die Trocknungseinrichtung mindestens eine Sorptionseinheit (73, 74) mit einem reversibel dehydrierbaren Trockenmaterial und eine der mindestens einen Sorptionseinheit (73, 74) zugeordnete Heizeinheit (75, 76) zum bedarfsweisen Erwärmen des Trockenmaterials aufweist, und wobei dem Abluftsystem (80) ferner mindestens ein der Trocknungseinrichtung nachgeschalteter und mit Wasser, insbesondere Frischwasser, gekühlter Wärmetauscher (81, 82, 83) zugeordnet ist zum Übertragen von thermischer Energie von zumindest einem Teil der über das Abluftsystem (80) aus der Transportspülmaschine (50) abzuführenden Abluft auf das Kühlwasser des mindestens einen Wärmetauschers (81, 82, 83).

2. Transportspülmaschine (50) nach Anspruch 1,
wobei der mindestens eine Wärmetauscher (81, 82, 83) einen mit einer Frischwasserzufuhrleitung (12-4) verbundenen oder verbindbaren Frischwassereinlass und einen Frischwasserauslass aufweist, welcher mit einem der mindestens einen Klarspülzone (54) zugeordneten Klarspüldüsensystem und/oder mit einem der mindestens einen Waschzone (51, 52, 53) zugeordneten Waschtank (14-1, 14-2, 14-3) verbunden oder verbindbar ist.

3. Transportspülmaschine (50) nach Anspruch 1 oder 2,
wobei das Abluftsystem (80) mindestens einen Abluftventilator (70, 71, 72) aufweist, und wobei der dem Abluftsystem (80) zugeordnete mindestens eine Wärmetauscher (81, 82, 83) vorzugsweise am saugseitigen Einlass des mindestens einen Abluftventilators (70, 71, 72) angeordnet und ausgelegt ist, die aus der mindestens einen Wasch- und Klarspülzone (51, 52, 53, 54) der Transportspülmaschine (50) abgeführte Abluft, nachdem sie die mindestens eine Sorptionseinheit (73, 74) passiert hat, durch Wärmeübertrag auf das Kühlwasser des Wärmetauschers (81, 82, 83) auf Raumtemperatur abzukühlen.

4. Transportspülmaschine (50) nach einem der Ansprüche 1 bis 3,
wobei das Trockenmaterial Zeolith, insbesondere Zeolith vom Typ Y, enthält.

5. Transportspülmaschine (50) nach einem der Ansprüche 1 bis 4,
wobei die der mindestens einen Sorptionseinheit (73, 74) zugeordneten Heizeinheit (75, 76) derart ausgebildet ist, dass durch Zufuhr von Wärme, insbesondere in Form von elektrischer Energie, Wasserdampf, Gas oder Heißwasser, die Heizeinheit (75, 76) das Trockenmaterial der Sorptionseinheit (73, 74) derart erwärmt, dass die zuvor von dem Trockenmaterial absorbierte Feuchtigkeit zumindest teilweise wieder von dem Trockenmaterial freigegeben wird.

6. Transportspülmaschine (50) nach einem der Ansprüche 1 bis 5,
wobei die Trocknungseinrichtung eine erste Sorptionseinheit (73) mit einem reversibel dehydrierbaren Trockenmaterial und eine zweite Sorptionseinheit (74) mit einem reversibel dehydrierbaren Trockenmaterial aufweist, wobei das Abluftsystem (80) einen der ersten Sorptionseinheit (73) zugeordneten ersten Abluftventilator (71) aufweist zum bedarfsweisen Ausbilden eines ersten Luftstroms derart, dass zumindest ein Teil der aus der Transportspülmaschine (50) abzuführenden Abluft durch die erste Sorptionseinheit (73) geführt wird, und wobei das Abluftsystem (80) einen der zweiten Sorptionseinheit (74) zugeordneten zweiten Abluftventilator (72) aufweist zum bedarfsweisen Ausbilden eines zweiten Luftstroms derart, dass zumindest ein Teil der aus der Transportspülmaschine (50) abzuführenden Abluft durch die zweite Sorptionseinheit (74) geführt wird.

7. Transportspülmaschine (50) nach Anspruch 6,
wobei das Abluftsystem (80) einen derart der ersten Sorptionseinheit (73) zugeordneten ersten Wärmetauscher (82) aufweist, dass beim Ausbilden des ersten Luftstroms zumindest ein Teil der durch die erste Sorptionseinheit (73) geführten Abluft anschließend den ersten Wärmetauscher (82) passiert, und wobei das Abluftsystem (80) ferner einen derart der zweiten Sorptionseinheit (74) zugeordneten zweiten Wärmetauscher (83) aufweist, dass beim Ausbilden des zweiten Luftstroms die durch die zweite Sorptionseinheit (74) geführte Abluft zumindest teilweise den zweiten Wärmetauscher (83) passiert.

8. Transportspülmaschine (50) nach Anspruch 7,
wobei der erste und zweite Wärmetauscher (82, 83) jeweils mit Wasser, insbesondere Frischwasser, gekühlt sind und einen mit einer Frischwasserzufuhrleitung (12-4) verbundenen oder verbindbaren Einlass und einen mit einem der mindestens einen Klarspülzone (54) zugeordneten Klarspüldüsensystem und/oder mit einem der mindestens einen Waschzone (51, 52, 53) zugeordneten Waschtank (14-1, 14-2, 14-3) verbundenen oder verbindbaren Auslass aufweisen.

9. Transportspülmaschine (50) nach einem der Ansprüche 6 bis 8,
wobei die Trocknungseinrichtung eine der ersten Sorptionseinheit (73) zugeordnete erste Heizeinheit (75) zum bedarfsweisen Erwärmen des Trockenmaterials der ersten Sorptionseinheit (73) und eine der zweiten Sorptionseinheit (74) zugeordnete zweite Heizeinheit (76) zum bedarfsweisen Erwärmen des Trockenmaterials der zweiten Sorptionseinheit (74) aufweist.

10. Transportspülmaschine (50) nach Anspruch 9,
welche ferner eine Steuereinrichtung (100) aufweist, wobei die Steuereinrichtung (100) ausgelegt ist, das Abluftsystem (80) und die Trocknungseinrichtung derart anzusteuern, dass die erste und zweite Sorptionseinheit (73, 74) zueinander derart gegenphasig betrieben werden, dass sich die erste oder zweite Sorptionseinheit (73, 74) in einer Adsorptionsphase befindet, in welcher das Trockenmaterial der ersten oder zweiten Sorptionseinheit (73, 74) Feuchtigkeit aus der Abluft aufnimmt, und dass sich die zweite oder erste Sorptionseinheit (74, 73) in einer Desorptionsphase befindet, in welcher das Trockenmaterial der zweiten oder ersten Sorptionseinheit (74, 73) regeneriert wird.

11. Transportspülmaschine (50) nach Anspruch 10,
wobei die der ersten Sorptionseinheit (73) zugeordnete erste Heizeinheit (75) ausgelegt ist, während einer Desorptionsphase der ersten Sorptionseinheit (73) dem Trockenmaterial der ersten Sorptionseinheit (73) Wärmeenergie zuzuführen, wobei die der ersten Sorptionseinheit (73) zugeordnete erste Heizeinheit (75) mit dem der zweiten Sorptionseinheit (74) zugeordneten zweiten Wärmetauscher (83) derart verbunden ist, dass zumindest ein Teil der bei der zweiten Sorptionseinheit (74) frei werdenden Adsorptionswärme zum Erwärmen des Trockenmaterials der ersten Sorptionseinheit (73) verwendet wird; und
wobei die der zweiten Sorptionseinheit (74) zugeordnete zweite Heizeinheit (76) ausgelegt ist, während einer Desorptionsphase der zweiten Sorptionseinheit (74) dem Trockenmaterial der zweiten Sorptionseinheit (74) Wärmeenergie zuzuführen, wobei die der zweiten Sorptionseinheit (74) zugeordnete zweite Heizeinheit (76) mit dem der ersten Sorptionseinheit (73) zugeordneten ersten Wärmetauscher (82) derart verbunden ist, dass zumindest ein Teil der bei der ersten Sorptionseinheit (73) frei werdenden Adsorptionswärme zum Erwärmen des Trockenmaterials der zweiten Sorptionseinheit (74) verwendet wird.

12. Transportspülmaschine (50) nach einem der Ansprüche 1 bis 11,
wobei ferner eine Sensoreinrichtung zum Ermitteln der Feuchteaufnahmekapazität des Trockenmaterials der mindestens einen Sorptionseinheit (73, 74) und eine Steuereinrichtung (100) vorgesehen sind, wobei die Steuereinrichtung (100) ausgebildet ist, die Ausgabe eines entsprechenden optischen und/oder akustischen Hinweises oder eine Regeneration des Trockenmaterials zu veranlassen, wenn die ermittelte Feuchteaufnahmekapazität des Trockenmaterials einen zuvor vorgegebenen oder vorgebbaren Wert unterschreitet.

13. Verfahren zum Betreiben einer Transportspülmaschine (50), insbesondere einer Transportspülmaschine (50) nach einem der Ansprüche 1 bis 12, wobei die Transportspülmaschine (50) mindestens eine Waschzone (51, 52, 53) und mindestens eine Klarspülzone (54) sowie eine Transportvorrichtung (58) zum Transportieren von Spülgut durch die mindestens eine Wasch- und Klarspülzone (51, 52, 53, 54) aufweist, und wobei das Verfahren die folgenden Verfahrensschritte aufweist:
i) während einer Adsorptionsphase wird Abluft aus der Transportspülmaschine (50) durch eine ein reversibel dehydrierbares Trockenmaterial aufweisende Sorptionseinheit (73, 74) derart geleitet, dass das Trockenmaterial Feuchtigkeit aus dem Luftstrom aufnimmt, wobei zumindest ein Teil der thermischen Energie der durch die Sorptionseinheit (73, 74) geleiteten Abluft in einem mit Wasser, insbesondere Frischwasser, gekühlten Wärmetauscher (81, 82, 83) auf das Kühlwasser des Wärmetauschers (81, 82, 83) übertragen wird, und wobei anschließend das in dem Wärmetauscher (81, 82, 83) erwärmte Kühlwasser in der mindestens einen Klarspülzone (54) der Transportspülmaschine (50) als Klarspülflüssigkeit und/oder in der mindestens einen Waschzone (51, 52, 53) der Transportspülmaschine (50) als Waschflüssigkeit versprüht wird; und
ii) während einer Desorptionsphase wird das Trockenmaterial der Sorptionseinheit (73, 74) erhitzt und gleichzeitig oder zeitlich versetzt Abluft aus der Transportspülmaschine (50) durch die das erhitzte Trockenmaterial aufweisende Sorptionseinheit (73, 74) geleitet derart, dass aus dem Trockenmaterial Feuchtigkeit desorbiert und zumindest ein Teil der in das Trockenmaterial zuvor eingebrachten thermischen Energie und zumindest ein Teil der aus dem Trockenmaterial desorbierten Feuchtigkeit mit Hilfe des durch die Sorptionseinheit (73, 74) geleiteten Luftstroms aus der Sorptionseinheit (73, 74) ausgetragen wird, wobei zumindest ein Teil der mit dem Luftstrom aus der Sorptionseinheit (73, 74) ausgetragenen thermischen Energie in dem Wärmetauscher (81, 82, 83) auf das Kühlwasser des Wärmetauschers (81, 82, 83) übertragen wird, und wobei anschlie-βend das in dem Wärmetauscher (81, 82, 83) erwärmte Kühlwasser in der mindestens einen Klarspülzone (54) der Transportspülmaschine (50) als Klarspülflüssigkeit und/oder in der mindestens einen Waschzone (51, 52, 53) der Transportspülmaschine (50) als Waschflüssigkeit versprüht wird.

14. Verfahren nach Anspruch 13,
wobei im Verfahrensabschnitt ii) der durch die das erhitzte Trockenmaterial aufweisende Sorptionseinheit (73, 74) geleitete Luftstrom anschließend derart in dem Wärmetauscher (81, 82, 83) abgekühlt wird, dass zumindest ein Teil der zuvor aus dem Trockenmaterial desorbierten und mit dem Luftstrom aus der Sorptionseinheit (73, 74) ausgetragenen Feuchtigkeit kondensiert.

15. Verfahren nach Anspruch 14,
wobei zumindest ein Teil der bei der Kondensation der aus der Sorptionseinheit (73, 74) ausgetragenen Feuchtigkeit frei werdenden Kondensationsenthalpie verwendet wird zum Erwärmen der in der mindestens einen Klarspülzone (54) zu versprühenden Klarspülflüssigkeit und/oder zum Erwärmen der in der mindestens einen Waschzone (51, 52, 53) zu versprühenden Waschflüssigkeit.

16. Verfahren nach einem der Ansprüche 13 bis 15,
wobei die Transportspülmaschine (50) eine erste Sorptionseinheit (73) und mindestens eine zweite Sorptionseinheit (74) aufweist, welche zueinander derart gegenphasig betrieben werden, dass bei der ersten Sorptionseinheit (73) der Verfahrensschritt ii) durchgeführt und das Trockenmaterial der ersten Sorptionseinheit (73) regeneriert wird, während bei der zweiten Sorptionseinheit (74) der Verfahrensschritt i) durchgeführt wird und das Trockenmaterial der zweiten Sorptionseinheit (74) Feuchtigkeit aus der Abluft der Transportspülmaschine (50) aufnimmt.

17. Verfahren nach einem der Ansprüche 13 bis 16,
wobei im Verfahrensschritt ii) das Trockenmaterial der Sorptionseinheit (73, 74) durch Zufuhr von Wärmeenergie erhitzt wird, und wobei zeitlich versetzt oder gleichzeitig mit der Wärmeenergiezufuhr zumindest ein Teil der aus der Transportspülmaschine (50) abzuführenden Abluft durch die Sorptionseinheit (73, 74) geleitet wird.

18. Verfahren nach einem der Ansprüche 13 bis 17,
wobei im Verfahrensschritt i) die Feuchteaufnahmekapazität des Trockenmaterials der Sorptionseinheit (73, 74) ermittelt wird, und wobei - abhängig von der ermittelten Feuchteaufnahmekapazität - vorzugsweise automatisch, und noch bevorzugter wahlweise automatisch die Adsorptionsphase der Sorptionseinheit (73, 74) beendet und die Desorptionsphase der Sorptionseinheit (73, 74) eingeleitet wird.

19. Verfahren nach Anspruch 18,
wobei die Feuchteaufnahmekapazität des Trockenmaterials vorzugsweise kontinuierlich oder zu vorgebbaren Zeiten oder Ereignissen über das Gewicht des Trockenmaterials, über die Zeitdauer der Adsorptionsphase und/oder über den Feuchtegehalt oder Temperatur der Luft am Ausgang der Sorptionseinheit (73, 74) ermittelt wird.

20. Verfahren nach einem der Ansprüche 13 bis 19,
wobei im Verfahrensschritt ii) die während der Desorptionsphase aus dem Trockenmaterial der Sorptionseinheit (73, 74) desorbierte Menge an Feuchtigkeit ermittelt wird, und wobei abhängig von der ermittelten Feuchtigkeitsmenge vorzugsweise automatisch, und noch bevorzugter wahlweise automatisch die Desorptionsphase der Sorptionseinheit (73, 74) beendet und die Adsorptionsphase der Sorptionseinheit (73, 74) eingeleitet wird.

21. Verfahren nach Anspruch 20,
wobei die während der Desorptionsphase aus dem Trockenmaterial der Sorptionseinheit (73, 74) desorbierte Menge an Feuchtigkeit vorzugsweise kontinuierlich oder zu vorgebbaren Zeiten oder Ereignissen über das Gewicht des Trockenmaterials, über die Zeitdauer der Desorptionsphase und/oder über den Feuchtegehalt oder Temperatur der Luft am Ausgang der Sorptionseinheit (73, 74) ermittelt wird.
